# EUROPEAN PATENT SPECIFICATION

(11) **EP 1 241 098 B1**
(45) Date of publication and mention of the grant of the patent: **18.02.2004**
(21) Application number: 01830161.4
(22) Date of filing: 12.03.2001
(51) Int. Cl.: B65B 51/22, B65B 51/30, B29C 65/00, B29C 65/08

(54) **Ultrasonic transverse sealing device and method for sealing walls of a packaging material filled with a pourable food product**
Verfahren und Vorrichtung zum Ultraschallquerversiegeln der Wände eines mit einem fliessfähigen Nahrungsmittel gefüllten Verpackungsmaterials
Procédé et dispositif de scellement transversal par ultrasons des parois d'un matériau d'emballage rempli d'un produit alimentaire fluide

(43) Date of publication of application: 18.09.2002
(73) Proprietor: Tetra Laval Holdings & Finance SA, 1009 Pully (CH)
(72) Inventor: Anderstedt, Jan, 271 50 Ystad (SE); Capasso, Salvatore, 41100 Modena (IT); Knutsson, Kent, 261 61 Landskona (SE); Nuamu, Mugeni, 227 60 Lund (SE)
(74) Representative: Franzolin, Luigi

(56) References cited:
- WO-A-99/43557
- DE-A- 3 941 015

## Description

The present invention relates to an ultrasonic transverse sealing device for sealing walls of a packaging material filled with a pourable food product.

Ultrasonic transverse sealing devices of the above type are used on machines for packaging pourable food products, e.g. fruit juice, wine, tomato sauce, pasteurized or long-storage (UHT) milk, etc., and on which packages are formed from a continuous tube of packaging material defined by a longitudinally sealed web.

The packaging material has a multilayer structure comprising a layer of paper material covered on both sides with layers of heat-seal plastic material, e.g. polyethylene; and, in the case of aseptic packages for long-storage products, such as UHT milk, the packaging material also comprises a layer of barrier material superimposed on a layer of heat-seal plastic material and in turn covered with another layer of heat-seal plastic material defining the inner face of the package eventually contacting the food product.

The web of packaging material is unwound off a reel, is folded into a cylinder, and is sealed longitudinally to form, in known manner, a continuous, vertical, longitudinally sealed tube. The tube of packaging material is filled continuously with the pourable food product and then fed to a forming and transverse sealing unit for forming the individual packages. The forming and sealing unit comprises said transverse sealing devices, each of which comprises two jaws for gripping and transversely sealing the tube to form pillow packs, which are separated from one another by cutting the sealed portions between the packs. One of the jaws comprises an ultrasonic-vibration generator for exciting the molecules of the heat-seal plastic material gripped between the jaws, and melting the heat-seal plastic material to seal the walls. In other words, the jaws deform and compress the walls of the tube locally at the ultrasonic sealing stage.

Once the sealing operation is completed, a knife is activated to cut the tube of packaging material along the centerline of the sealed portion or between two sealed portions, and so cut a pillow pack off the bottom end of the tube of packaging material.

The pillow packs are then fed to a final folding station where they are folded mechanically into the finished packages.

Since the efficiency of ultrasonic sealing is directly proportional to the pressure exerted by the jaws on the walls of the tube, the jaws are pressed together with considerable force to exert relatively high pressure along the contact portion or so-called transverse seal portion of the walls.

A central portion of the transverse seal portion comprises a portion of the longitudinal seal, which is defined by two superimposed, sealed portions of one wall, and forms a localized variation in the thickness of the transverse seal portion. Consequently, to ensure constant pressure, as far as possible, along the whole transverse seal portion, the jaw contacting said portion of the longitudinal seal has a slot of the same width as the longitudinal seal.

The slot ensures substantially constant pressure along the whole transverse seal portion when the longitudinal seal is aligned precisely with the slot. Conversely, in the event the longitudinal seal is offset slightly to the side of the slot, the longitudinal seal is gripped partly along a portion of the jaw without the slot, while the portion of the transverse seal portion with no longitudinal seal is gripped at the slot and so possibly subjected by the jaws to insufficient pressure to seal the walls perfectly.

Moreover, the thickness of the packaging material varies considerably with respect to the rated thickness, owing to the difficulty and cost of conforming to strict tolerances in the manufacture of multilayer packaging material. Consequently, the depth of the slot is based simply on an average packaging material thickness, and is not always suitable for applying the pressure required for ultrasonic transverse sealing at the longitudinal seal.

As a result, flaws may arise in the transverse seal at or immediately adjacent to the longitudinal seal, thus possibly impairing the aseptic nature of the packages.

Furthermore, WO 99/43557 discloses an ultrasonic transverse sealing device in accordance with the preamble of claim 1.

It is an object of the present invention to provide an ultrasonic transverse sealing device designed to eliminate the drawbacks of the known state of the art, and which, in particular, provides for obtaining a complete, effective transverse seal.

According to the present invention, there is provided an ultrasonic transverse sealing device for sealing walls of a packaging material filled with a pourable food product, as claimed in Claim 1.

The Applicant has found that the grooved intermediate portion is capable of transmitting sufficient pressure to obtain an ultrasonic transverse seal at both the longitudinal seal and the portions with no longitudinal seal.

The present invention also relates to an ultrasonic sealing method.

According to the present invention, there is provided an ultrasonic transverse sealing method as claimed in Claim 12.

A preferred, non-limiting embodiment of the present invention will be described by way of example with reference to the accompanying drawings, in which:
Figure 1 shows a view in perspective of a sealing device in accordance with the present invention;
Figure 2 shows a larger-scale schematic section, with parts removed for clarity, of the Figure 1 sealing device at one operating step;
Figure 3 shows a larger-scale front view of a detail in Figure 1;
Figure 4 shows a section of the Figure 3 detail along line IV-IV;
Figure 5 shows a larger-scale side view of a portion of the tube.

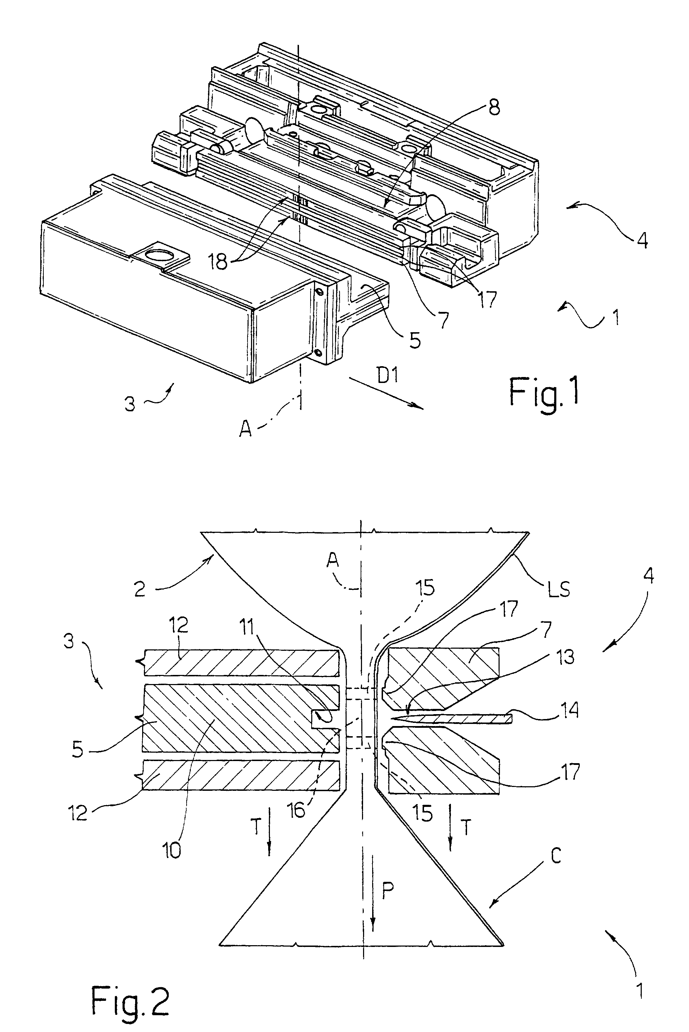

Figure 1 shows as a whole a transverse sealing device 1 for a machine for packaging pourable food products, such as pasteurized or UHT milk, fruit juice, wine, etc..

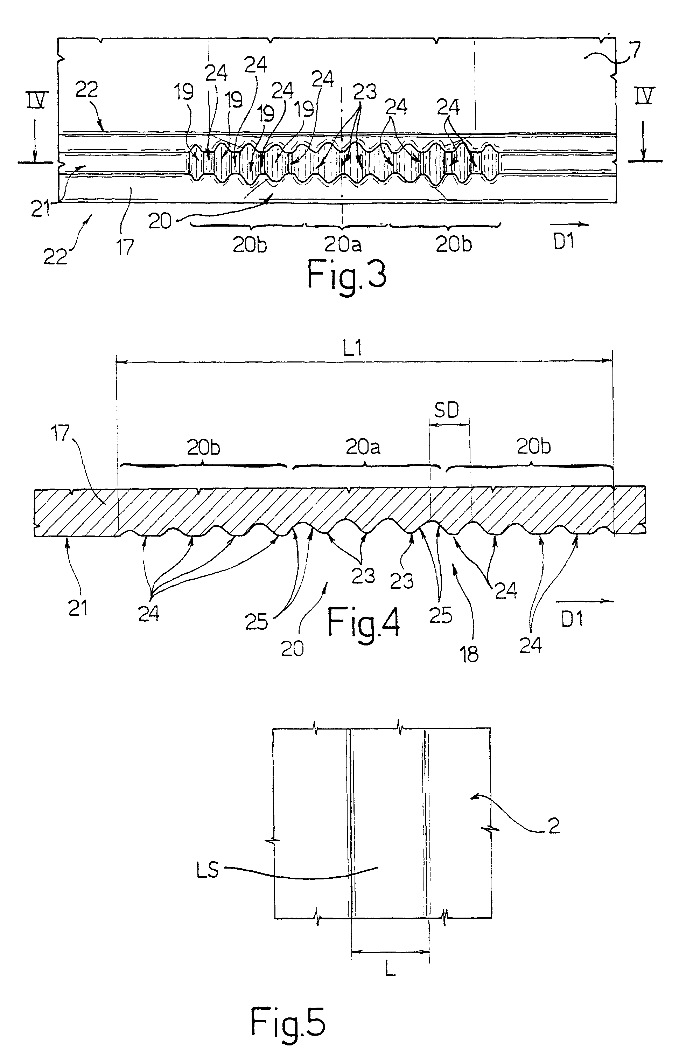

With reference to Figure 2, device 1 provides for forming sealed packages C of the pourable food product from a tube 2 of packaging material formed by longitudinally folding and sealing a web comprising heat-seal plastic material, and filled with the food product upstream from device 1. As shown in Figure 5, tube 2 therefore comprises a longitudinal seal LS of width L and defined by two superimposed, sealed portions of packaging material.

Tube 2 is fed to device 1 in known manner along a vertical path P extending along an axis A.

With reference to Figure 1, device 1 comprises two facing jaws 3 and 4 extending in a direction D1 crosswise to axis A and supported in known manner by a known forming and sealing unit not shown in the accompanying drawings. Jaw 3 comprises a hammer 5, and an ultrasonic generator 6 connected to hammer 5; and jaw 4 comprises an anvil 7 facing hammer 5, and a cutting device 8.

With reference to Figure 2, tube 2 is fed continuously along path P, while each jaw 3, 4 is fed in known manner by said unit (not shown) along a respective annular path (not shown) comprising a portion T parallel to path P of tube 2. Along portions T, jaws 3 and 4 are pressed one against the other to locally deform and seal tube 2. Tube 2 is substantially cylindrical and is deformed by jaws 3 and 4 to form, along tube 2, two opposite, mutually contacting walls 9.

Hammer 5 extends in direction D1 and comprises a central portion 10 for deforming and compressing walls 9 of tube 2, and having a slot 11; and an outer portion 12, which substantially provides for deforming tube 2 and bringing walls 9 together.

Anvil 7 extends in direction D1 and has a gap 13 aligned with slot 11; and cutting device 8 comprises a knife 14 housed inside gap 13 and movable back and forth with respect to anvil 7 to penetrate slot 11 in hammer 5 and cut walls 9 once these are sealed transversely. Jaws 3 and 4 transversely seal walls 9 at two portions 15, and leave walls 9 separate at a portion 16 between the two portions 15 and aligned with gap 13 and slot 11.

In Figure 2, jaws 3 and 4 are mated to expel the food product between walls 9, and are pushed against each other to obtain a pressure P1 at portions 15, which are swept by the compressive ultrasonic vibrations generated by generator 6. The combined action of pressure P1 and the ultrasonic vibrations melts the heat-seal plastic material and provides for hermetically sealing walls 9 at seal portions 15. Anvil 7 comprises two raised ribs 17 extending in direction D1, located on opposite sides of gap 13, and defining transverse seal portions 15 along walls 9.

With reference to Figure 1, each rib 17 comprises a portion 18 located at the centerline region of anvil 7 and for transmitting pressure P1 to walls 9 at longitudinal seal LS of tube 2. With reference to Figure 3, portion 18 of rib 17 is grooved, i.e. has a succession of grooves 19 parallel to axis A and alternating with teeth 20; rib 17 has a trapezoidal section, a front work surface 21, and two connecting surfaces 22; grooves 19 and teeth 20 are equally spaced in direction D1 with a spacing SD of 0.8 to 1.2 mm along portion 18, and are arranged symmetrically with respect to axis A; grooves 19 increase in depth towards the centerline of portion 18; and teeth 20 are divided into groups 20a and 20b. One group 20a is located at the centerline of portion 18, and the respective teeth 20 have a rounded top end 23 set slightly back with respect to the plane of surface 21; two groups 20b are located on opposite sides of group 20a, and the respective teeth have a flat end 24 coplanar with surface 21; each tooth 20 has two sides 25 at a right-angle to each other; and portion 18 comprises twelve grooves 19, and is of a length L1, which is greater than the width L of longitudinal seal LS by twice spacing SD.

In actual use, walls 9 are gripped between jaws 3 and 4, seal portions 15 are compressed between hammer 5 and ribs 17, and longitudinal seal LS is positioned contacting portion 18. When the longitudinal seal is aligned perfectly with axis A, portion 18 has two grooves 19 located on opposite sides of longitudinal seal LS and cooperating with walls 9 at a portion with no longitudinal seal LS. That is, the end teeth 20 of portion 18 ensure the pressure required to effect an ultrasonic transverse seal at the portions with no longitudinal seal LS, while grooves 19 allow the packaging material of longitudinal seal LS to deform and receive pressure from sides 25 of teeth 2C.

The transverse seal is effective even when longitudinal seal LS is not aligned perfectly with portion 18. That is, device 1 ensures an effective transverse seal at least when the misalignment one way or the other in direction D1 is within the spacing SD of grooves 19, by the depth of grooves 19 decreasing towards the ends of portion 18 and enabling sufficient pressure to be transmitted to walls 9 both at longitudinal seal LS and at the portions with no longitudinal seal LS.

In other words, grooved portion 18 provides for transmitting to a seal portion 15 of uneven thickness a pressure sufficient to ultrasonically seal portion 15 and to compensate for any variations in the thickness of the packaging material.

Obviously, the greater length L1 of portion 18 is with respect to the width L of the longitudinal seal, the greater the misalignment allowance will be, i.e. the misalignment not impairing the efficiency of the transverse seal.

Clearly, changes may be made to the sealing device and method according to the present invention without, however, departing from the scope of the accompanying Claims.

In particular, the sealing device and method may be used for sealing pre-formed and individually filled packages made from blanks, as opposed to a continuous tube of packaging material.

## Claims

1. An ultrasonic transverse sealing device for sealing a packaging material (2) filled with a pourable food product, wherein the packaging material (2) comprises at least one cover layer of heat-seal plastic material and a longitudinal seal (LS); the device (1) comprising two jaws (3, 4) for compressing two walls (9) defined by said packaging material (2) locally along a transverse seal portion (15) comprising a portion of the longitudinal seal (LS), and an ultrasonic generator (6) for subjecting the transverse seal portion (15) to ultrasonic vibrations to melt the heat-seal plastic material and seal the walls (9) along said transverse seal portion (15); one of the jaws (3, 4) comprising an intermediate portion (18) for compressing the portion of the longitudinal seal (LS) located along the transverse seal portion (15); the device being **characterized in that** said intermediate portion (18) comprises a succession of grooves (19) extending transversely to the jaw.

2. A device as claimed in Claim 1, **characterized in that** said packaging material defines a tube (2) filled with said pourable food product and fed along a path (P), said grooves (19) being parallel to said path (P).

3. A device as claimed in Claim 1 o 2, **characterized in that** said intermediate portion (18) is located along a raised rib (17) of one of the jaws (3, 4); said raised rib (17) having an active front surface (21) for compressing said walls (9), and two connecting surfaces (22).

4. A device as claimed in Claim 3, **characterized in that** said grooves (19) are equally spaced with a given spacing (SD) along the intermediate portion (18).

5. A device as claimed in any one of the foregoing Claims, **characterized in that** said grooves (19) increase in depth towards the centerline of said intermediate portion (18).

6. A device as claimed in any one of the foregoing Claims, **characterized in that** said grooves (19) alternate with teeth (20).

7. A device as claimed in Claim 6, **characterized by** comprising a first group (20a) of said teeth (20) located at the centerline of the intermediate portion (18); each tooth (20) in said first group (20a) having a first end (23) set back with respect to the plane of the active front surface (21) of the raised rib (17).

8. A device as claimed in Claim 7, **characterized in that** said fist end (23) is rounded.

9. A device as claimed in Claim 7 or 8, **characterized by** comprising two second groups (20b) of teeth (20); the second groups (20b) being located on opposite sides of the first group (20a); and each tooth (20) in said second groups (20b) having a second end (24) flush with the plane of the active front surface (21) of the raised rib (17).

10. A device as claimed in Claim 9, **characterized in that** said second end (24) is flat and coplanar with said active front surface (21).

11. A device as claimed in any one of Claims 6 to 10, **characterized in that** each of said teeth (20) has two sides (25) parallel to the path (P) and substantially at a right-angle to each other.

12. An ultrasonic transverse sealing method for sealing walls (9) of a packaging material (2) filled with a pourable food product, wherein the packaging material (2) comprises at least one cover layer of heat-seal plastic material, and the packaging material (2) has a longitudinal seal (LS); the method providing for sealing the walls (9) by means of the sealing device (1) claimed in any one of Claims 1 to 11, wherein the longitudinal seal (LS) has a given first width (L), and the intermediate portion (18) has a second width (L1); the method being **characterized by** placing said longitudinal seal (LS) in contact with said intermediate portion (18); said second width (L1) being greater than the first width (L).

## Patentansprüche

1. Vorrichtung zum Ultraschallquerversiegeln eines mit einem fließfähigen Nahrungsmittel gefüllten Verpackungsmaterials (2), wobei das Verpackungsmaterial (2) wenigstens eine Abdeckschicht aus heißversiegelbaren Kunststoffmaterial und eine Längsversiegelung (LS) aufweist; wobei die Vorrichtung (1) aufweist zwei Backen (3, 4) zum Pressen von zwei durch das Verpackungsmaterial (2) definierten Wänden (9) lokal entlang einem quer verlaufenden Versiegelungsabschnitt (15), der einen Längsversiegelungsabschnitt (LS) aufweist, und einen Ultraschallgenerator (6), um den quer verlaufenden Versiegelungsabschnitt (15) Ultraschallvibrationen auszusetzen, um das heißversiegelbare Kunststoffmaterial zu schmelzen und die Wände (9) entlang dem querverlaufenden Versiegelungsabschnitt (15) zu versiegeln; wobei eine der Backen (3, 4) einen mittleren Abschnitt (18) aufweist zum Pressen des Abschnitts der Längsversiegelung (LS), der sich entlang dem querverlaufenden Versiegelungsabschnitts (15) befindet; wobei die Vorrichtung **dadurch gekennzeichnet ist, dass** der mittlere Abschnitt (18) eine Aufeinanderfolge von Rillen (19) aufweist, die sich quer zur Backe erstrecken.

2. Vorrichtung nach Anspruch 1, **dadurch gekennzeichnet, dass** das Verpackungsmaterial einen Schlauch (2) definiert, der mit dem fließfähigen Nahrungsmittel gefüllt ist und entlang einem Weg (P) vorgeschoben wird, wobei die Rillen (19) parallel zu Weg (P) sind.

3. Vorrichtung nach Anspruch 1 oder 2, **dadurch gekennzeichnet, dass** sich der mittlere Abschnitt (18) entlang einem erhobenen Steg (17) auf einer der beiden Backen (3, 4) befindet; wobei der erhobene Steg (17) eine aktive Vorderfläche (21) zum Pressen der Wände (9) und zwei Verbindungsflächen (22) hat.

4. Vorrichtung nach Anspruch 3, **dadurch gekennzeichnet, dass** die Rillen (19) entlang dem mittleren Abschnitt (18) mit einem vorgegebenen Abstand (SD) gleichmäßig von einander beabstandet sind.

5. Vorrichtung nach einem der vorhergehenden Ansprüche, **dadurch gekennzeichnet, dass** die Tiefe der Rillen (19) zur Mittellinie des mittleren Abschnitts (18) hin zunimmt.

6. Vorrichtung nach einem der vorhergehenden Ansprüche, **dadurch gekennzeichnet, dass** die Rillen (19) sich mit Zähnen (20) abwechseln.

7. Vorrichtung nach Anspruch 6, **gekennzeichnet durch** das Aufweisen einer ersten Gruppe (20a) von Zähnen (20), die sich an der Mittellinie des mittleren Abschnitts (18) befinden; wobei jeder Zahn (20) der ersten Gruppe (20a) ein erstes Ende (23) aufweist, das mit Bezug auf die Ebene der aktiven Vorderfläche (21) des erhobenen Stegs (17) zurückversetzt ist.

8. Vorrichtung nach Anspruch 7, **dadurch gekennzeichnet, dass** das erste Ende (23) abgerundet ist.

9. Vorrichtung nach Anspruch 7 oder 8, **gekennzeichnet durch** das Aufweisen von zwei zweiten Gruppen (20b) von Zähnen (20); wobei die zweiten Gruppen (20b) auf gegenüberliegenden Seiten der erste Gruppe (20a) angeordnet sind; und wobei jeder Zahn (20) in den zweiten Gruppen ein zweites Ende (24) hat, das mit der Ebene der aktiven Vorderfläche (21) des erhobenen Stegs (17) ausgerichtet ist.

10. Vorrichtung nach Anspruch 9, **dadurch gekennzeichnet, dass** das zweite Ende (24) flach ist und sich in einer Ebene mit der aktiven Vorderfläche (21) befindet.

11. Vorrichtung nach einem der Ansprüche 6 bis 10, **dadurch gekennzeichnet, dass** jeder Zahn (20) zwei Seiten (25) hat, die parallel zu Weg (P) und im Wesentlichen im rechten Winkel zueinander sind.

12. Verfahren zum Ultraschallquerversiegeln der Wände (9) eines mit einem fließfähigen Nahrungsmittel gefüllten Verpackungsmaterials (2), wobei das Verpackungsmaterial (2) wenigstens eine Abdeckschicht aus heißversiegelbaren Kunststoffmaterial hat und das Verpackungsmaterial eine Längsversiegelung (LS) aufweist; wobei das Verfahren das Versiegeln der Wände (9) durch die Versiegelungsvorrichtung (1) wie in einem der Ansprüche 1 bis 11 beansprucht, vorsieht, wobei die Längsversiegelung (LS) eine vorgegebene erste Breite (L) hat und der mittlere Abschnitt eine zweite Breite (L1) hat; wobei das Verfahren **gekennzeichnet ist durch** das Anordnen der Längsversiegelung (LS) in Kontakt mit dem mittleren Abschnitt (18); wobei die zweite Breite (L1) größer ist als die erste Breite (L).

## Revendications

1. Dispositif de scellement transversal par ultrasons pour souder un matériau d'emballage (2) rempli d'un produit alimentaire fluide, dans lequel le matériau d'emballage (2) comprend au moins une couche de revêtement en matière plastique thermosoudable et une soudure longitudinale (LS) ; le dispositif (1) comprenant deux mâchoires (3, 4) pour comprimer deux parois (9) définies par le dit matériau d'emballage (2) localement le long d'une partie de scellement transversal (15) contenant une partie de la soudure longitudinale (LS), et un générateur d'ultrasons (6) pour soumettre la partie de scellement transversal (15) à des vibrations d'ultrasons de manière à faire fondre la matière plastique thermosoudable et à souder les parois (9), le long de la dite partie de scellement transversal (15); une des mâchoires (3, 4) comprenant une partie intermédiaire (18) pour comprimer la partie de la soudure longitudinale (LS) située dans la partie de scellement transversal (15) ; le dispositif étant **caractérisé en ce que** la dite partie intermédiaire (18) comprend une succession de rainures (19) s'étendant transversalement à la mâchoire.

2. Dispositif selon la revendication 1, **caractérisé en ce que** le dit matériau d'emballage définit un tube (2) rempli avec le dit produit alimentaire fluide et avancé le long d'un chemin (P), les dites rainures (19) étant parallèles au dit chemin (P).

3. Dispositif selon la revendication 1 ou 2, **caractérisé en ce que** la dite partie intermédiaire (18) est située le long d'une nervure surélevée (17) d'une des mâchoires (3, 4); la dite nervure surélevée (17) ayant une surface avant active (22) pour comprimer les dites parois (9) et deux surfaces de raccordement (22).

4. Dispositif selon la revendication 3, **caractérisé en ce que** les dites rainures (19) sont équidistantes, avec un espacement donné (SD) le long de la partie intermédiaire (18).

5. Dispositif selon une quelconque des revendications précédentes, **caractérisé en ce que** les dites rainures (19) augmentent de profondeur vers le centre de la dite partie intermédiaire (18).

6. Dispositif selon une quelconque des revendications précédentes, **caractérisé en ce que** les dites rainures (19) alternent avec des dents (20).

7. Dispositif selon la revendication 6, **caractérisé en ce qu'**il comprend un premier groupe (20a) de dites dents (20) situé au centre de la partie intermédiaire (18) ; chaque dent (20) du dit premier groupe (20a) ayant une première extrémité (23) en retrait par rapport au plan de la surface avant active (21) de la nervure surélevée (17).

8. Dispositif selon la revendication 7, **caractérisé en ce que** le la dite première extrémité (23) est arrondie.

9. Dispositif selon la revendication 7 ou 8, **caractérisé en ce qu'**il comprend deux deuxièmes groupes (20b) de dents (20), les deuxièmes groupes (20b) étant situés de part et d'autre du premier groupe (20a) ; et chaque dent (20) des dits deuxièmes groupes (20b) ayant une deuxième extrémité (24) en affleurement avec le plan de la surface avant active (21) de la nervure surélevée (17).

10. Dispositif selon la revendication 9, **caractérisé en ce que** la dite deuxième extrémité (24) est plane et dans le même plan que la dite surface avant active (21).

11. Dispositif selon une quelconque des revendications 6 à 10, **caractérisé en ce que** chacune des dites dents (20) présente deux côtés (25) parallèles au chemin (P) et sensiblement perpendiculaires l'un à l'autre.

12. Procédé de scellement transversal par ultrasons pour souder des parois (9) d'un matériau d'emballage (2) rempli d'un produit alimentaire fluide, dans lequel le matériau d'emballage (2) comprend au moins une couche de revêtement en matière plastique thermosoudable, et le matériau d'embattage (2) comporte une soudure longitudinale (LS) ; le procédé comprenant le soudage des parois (9) au moyen du dispositif de soudage (1) selon une quelconque des revendications 1 à 11, dans lequel la soudure longitudinale (LS) a une première largeur donnée (L) et la partie intermédiaire (18) a une deuxième largeur (L1) ; le procédé étant **caractérisé par** le positionnement de la dite soudure longitudinale (LS) en contact avec la dite partie intermédiaire (18), la dite deuxième largeur (L1) étant plus grande que la première largeur (L).
